# EUROPÄISCHE PATENTANMELDUNG

(11) **EP 1 927 535 A2**
(43) Veröffentlichungstag der Anmeldung: **04.06.2008**
(21) Anmeldenummer: 07121713.7
(22) Anmeldetag: 28.11.2007
(51) Int. Cl.: B62D 29/00

(54) **Leichtbau-Formteil und entsprechendes Herstellungsverfahren**

(30) Priorität: 28.11.2006 DE 102006056136
(71) Anmelder: ZoE GmbH & Co. KG, 94209 Regen (DE)
(72) Erfinder: Hock, Klaus, 94209 Regen (DE); Huber, Otto, 84140 Gangkofen (DE); Klaus, Hubert, 84030 Ergolding (DE)
(74) Vertreter: Barth, Stephan Manuel

(57) **Zusammenfassung**

Die vorliegende Erfindung stellt ein Leichtbau-Formteil mit einem Kernbereich (8) aus einem Leichtbau-Verbundwerkstoff (10, 15), der ein Matrixmaterial (15) und mindestens ein Leichtfüllstoffmaterial (10) aufweist, und mindestens einem oberflächlichen oder oberflächennahen Deckschichtbereich (2, 2a), der das Matrixmaterial (15) und kein Leichtfüllstoffmaterial (10) aufweist, sowie ein Herstellungsverfahren für ein derartiges Leichtbau-Formteil bereit.

## Beschreibung

### STAND DER TECHNIK

Die vorliegende Erfindung betrifft ein Leichtbau-Formteil und ein entsprechendes Herstellungsverfahren.

Leichtbau-Werkstoffe bzw. Formteile finden heutzutage in vielen Bereichen der Technik Anwendung, wie z.B. im Automobilbau, Flugzeugbau und Schiffsbau sowie allgemein im Verkehrswesen. Sie zeichnen sich wegen ihrer hohen Festigkeit und im Vergleich zu herkömmlichen Konstruktionsmaterialien geringen Dichte aus und ermöglichen eine kostengünstige Herstellung stark beanspruchter Bauelemente. Besonders interessant sind Leichtbau-Werkstoffe mit einer Dichte unterhalb von 1 g/cm³, deren Dichte unterhalb der Dichte der meisten gängigen Kunststoffe liegt.

Zumeist besitzen solche Leichtbau-Werkstoffe Kerne aus zellularen Werkstoffen und zellularen Verbundwerkstoffen aus syntaktischem Schaum. Bei konventionellen zellularen Werkstoffen ist die Schubfestigkeit im Vergleich zur Druckfestigkeit sehr gering.

Derartige Leichtbau-Werkstoffe sind jedoch oft nicht ausreichend steif und ihre Verschleißfestigkeit ist nicht ausreichend hoch genug. Daher werden Leichtbau-Werkstoffe mit anderen Bauteilen verklebt, um somit steife und verschleißfeste Bauteile mit geringer Dichte zu erhalten. So nennt beispielsweise das europäische Patent EP 849081 und die deutsche Offenlegungsschrift DE 10046298 derartige Bauteile.

Sowohl in Bezug auf die thermische als auch auf die mechanische Beanspruchung stellt die auftretende Klebefuge zwischen den unterschiedlichen Bereichen des Bauteils einen Schwachpunkt dar. Die unterschiedlichen Materialien werden durch eine Delamination geschädigt. Darüber hinaus ist der Klebeprozess bzw. Laminierungsprozess wegen der Aushärtezeit zeitaufwändig und zudem teuer: Es wäre daher wünschenswert, ein Bauteil ohne eine derartige Klebefuge herstellen zu können.

Ein weiterer Nachteil beim verkleben von Bauteilen mit Leichtfüllstoffen ist die starke Saugfähigkeit der Leichtfüllstoffe im Oberflächenbereich. Dadurch werden beispielsweise Gießharze zum Verkleben der Schichten oder auch Wasser in den Leichtfüllstoffen aufgesogen, wodurch ein erhöhter Verbrauch an Bindemittel oder eine Erhöhung der Dichte durch die Integration von Wasser einhergeht. Außerdem bieten derartige Leichtfüllstoffe an der Oberfläche der Bauteile einen Nährboden für Bakterien.

Es ist daher eine Aufgabe der vorliegenden Erfindung, hochverschleißfeste, steife Strukturen bereitzustellen, die keine Leichtfüllstoffe an der Oberfläche aufweisen und zudem eine ansprechende Optik besitzen.

Die Erfindung schafft das in Anspruch 1 angegebene Leichtbau-Formteil bzw. das in Anspruch 14 angegebene Herstellungsverfahren.

Die vorliegende Erfindung ermöglicht es, den Klebeprozess bzw. Laminierungsprozess bei der Sandwichherstellung zu eliminieren und damit das Leichtbau-Potential des leichten Kernmaterials, beispielsweise eines zellularen Verbundwerkstoffs oder eines anderen syntaktischen Schaums voll auszuschöpfen und eine wirtschaftliche Fertigung zu ermöglichen.

Die der vorliegenden Erfindung zugrundeliegende Idee besteht darin, den Klebprozess bzw. Laminierungsprozess zwischen einem Kernbereich und einer oder mehreren oberflächlichen oder oberflächennahen Deckschicht(en) durch eine Integration der Deckschichtherstellung in den Herstellungsprozess des Kernbereichs zu eliminieren.

Die Erfindung schafft Sandwichelemente bestehend aus einem Kernbereich, aus einem Leichtbau-Verbundwerkstoff mit einer oder mehreren integrierten Deckschichten. Die Sandwichelemente können schmal (Sandwichbalken) oder breit (Sandwichplatten) sein. Sie können eben oder gekrümmt (einfach oder mehrfach) sein.

Unter Leichtbau-Verbundwerkstoff wird hierin allgemein ein Werkstoff verstanden, der ein Matrixmaterial und mindestens ein leichtes Füllstoffmaterial aufweist. Die leichten Verbundwerkstoffe für die Kerne der erfindungsgemäßen Sandwichelemente bzw. erfindungsgemäßen Leichtbau-Verbundprofile können zellulare Verbundwerkstoffe, wie die Kunststoff-gebundene oder Metall-gebundene Leichtbau-Verbundwerkstoffe auf der Basis von Mineralschaumgranulaten sein, wie beispielsweise in der EP 1188730 A2 und der EP 0851808 B1 offenbart. Ebenfalls in Frage kommen zellulare Leichtbau-Verbundwerkstoffe auf der Basis von Metallschaumgranulaten oder Verbundwerkstoffe, bestehend aus Hohlkugeln oder Mikrohohlkugeln, Glas, Keramik oder Metall, in einer Kunststoff- oder Metallmatrix oder sonstige syntaktische Schäume, zum Beispiel syntaktische Schäume auf der Basis von Mineralschaumgranulaten.

Die Leichtbau-Formteile der vorliegenden Erfindung zeichnen sich durch einen Kernbereich aus einem Leichtbau-Verbundwerkstoff, der ein Matrixmaterial und mindestens ein Leichtfüllstoffmaterial aufweist, und mindestens einen oberflächlichen oder oberflächennahen Deckschichtbereich, der das Matrixmaterial, jedoch kein Leichtfüllstoffmaterial aufweist, aus. Die Formteile besitzen daher durchgängig ein Matrixmaterial, das in einem Kernbereich mit einem Leichtfüllstoffmaterial versehen ist, um die Dichte des Formteils zu vermindern und gleichzeitig die Steifigkeit und Festigkeit des Materials zu erhöhen.

Durch die Integration eines Leichtfüllstoffmaterials in den Kernbereich des Leichtbau-Formteils kann die Dichte des Leichtbau-Formteils gegenüber einem lediglich aus Matrixmaterial bestehenden Formteil stark verringert werden. Die Dichte des Kernbereichs liegt dabei im Bereich von 0,2 - 0,9 g/cm³, bevorzugt von 0,3 - 0,7 g/cm³. Die Dichte des oberflächennahen bzw. oberflächlichen Deckschichtbereichs, der kein Leichtfüllstoffmaterial aufweist, liegt bei einer etwas höheren Dichte im Bereich von 1 - 2,6 g/cm³, bevorzugt von 1,2 - 2,2 g/cm³ und noch bevorzugter von 1,4 - 2,1 g/cm³. Das Leichtbau-Formteil der vorliegenden Erfindung weist somit zwei Bereiche unterschiedlicher Dichte auf, die jedoch durch ein durchgängiges Matrixmaterial fest miteinander verbunden sind. Eine trennende Klebe- bzw. Laminierschicht liegt zwischen den unterschiedlichen Bereichen nicht vor. Das Leichtfüllstoffmaterial, das in einen Kernbereich des Formteils integriert wird, dient zur Reduktion der Dichte des Kernbereichs und gleichzeitig zur Erhöhung der Festigkeit des gesamten Formteils. Als Leichtfüllstoffmaterial eignen sich Hohlkörper, bevorzugt Hohlglaskugeln, jedoch auch andere Materialien wie Blähton, Blähglasgranulate, geschäumtes Blähglas, Mineralschaumgranulate, Metallschaumgranulate oder Hohlkugeln aus Glas, Keramik und Verbundwerkstoffen sind als Leichtfüllstoffmaterial geeignet.

Das Leichtbau-Formteil kann neben dem Matrixmaterial und dem Leichtfüllstoffmaterial im Kernbereich zusätzlich ein Bindemittel aufweisen. Das Bindemittel umgibt die Kontaktbereiche der Leichtfüllstoffmaterialien untereinander oder kann auch das Leichtfüllstoffmaterial vollständig bedecken. Bei einem Herstellungsverfahren für ein Leichtbau-Formteil kann zunächst ein Körper aus Leichtfüllstoffmaterial hergestellt werden, der lediglich ein Bindemittel aufweist, wobei das Bindemittel die einzelnen Leichtfüllstoffmaterialkörner bzw. -teilchen derart miteinander verbindet bzw. verklebt, dass ein einstückiges Teil aus Leichtfüllstoffmaterial entsteht, das jedoch zwischen den Leichtfüllstoffmaterialteilchen Hohlräume aufweist. Bevorzugt liegt der Anteil an Bindemittel im Verhältnis zum Leichtfüllstoffmaterial im Bereich von 5-30 Gew.-%, bevorzugt 8-25 Gew.-%.

Das derart hergestellte Körper aus Leichtfüllstoffmaterial kann anschließend mit dem Matrixmaterial durchtränkt werden, wodurch die Hohlräume zwischen den Leichtfüllstoffmaterialteilchen vollständig bzw. annähernd vollständig aufgefüllt werden.

Als Bindemittel und/oder Matrixmaterial sind unterschiedliche Harze geeignet. Beispielsweise können Harze wie Polyesterharze, Epoxydharze, Polymethylacrylate, Vinylesterharze, Polyurethane, urethanmodifizierte Polyacrylate oder Silikonharze verwendet werden. Jegliches Harz kann verwendet werden, das vor der Aushärtung bzw. Polymerisation des Harzes eine Viskosität von unterhalb 10 Pa.s, bevorzugt im Bereich von 0,1 - 5 Pa.s aufweist.

Besonders bevorzugt wird ein kalthärtbares urethanmodifiziertes Polyacrylat, wie nachstehend bei den Beispielen beschrieben ist, verwendet.

Das Leichtfüllstoffmaterial, das in dem Leichtbau-Formteil bevorzugt verwendet wird, besitzt eine Dichte von 0,05 - 1 g/cm³, bevorzugter von 0,1 - 0,5 g/cm³ und am bevorzugtesten von 0,12 - 0,4 g/cm³. Das Leichtfüllstoffmaterial besitzt bevorzugt eine annähernd kugelförmige Gestalt. Die Korngröße des Leichtfüllstoffmaterials liegt dabei bevorzugt in einem Bereich von 0,3 - 16 mm, bevorzugter im Bereich von 0,5 - 8 mm und am bevorzugtesten von 1 - 8 mm. Gängige Durchmesserfraktionen (übliche Sieblinien) sind (1-2 mm), (2-4 mm) und (4-6 mm). Die Dichte der Schaumgranulate liegt üblicherweise zwischen 0,1 g/cm³ und 1,0 g/cm³. Gängige Dichten der Hohlkugeln liegen bei 0,1 g/cm³ bis 0,9 g/cm³.

Durch die bevorzugt annähernd kugelförmige Gestalt der Leichtfüllstoff-Materialkörner und einer entsprechenden Größe werden gleichmäßig verteilt etwa gleichgroße Hohlräume zwischen den Körners des Leichtfüllstoffmaterials ausgebildet. Diese Hohlräume können anschließend leicht durch ein Matrixmaterial, dem gegebenenfalls weitere Füllstoffe mit kleinerer Korngröße zugegeben werden können, aufgefüllt werden.

Das Matrixmaterial kann zusätzlich einen weiteren Füllstoff aufweisen. Dieser Füllstoff kann bevorzugt aus Glasfasern, mineralischen Füllstoffen oder organischen Füllstoffen bestehen. Insbesondere werden Aluminiumhydroxid, Quarz, Quarzmodifikationen oder ein quarzhaltiges Gemenge als Füllstoff verwendet. Insbesondere die Verwendung von Aluminiumhydroxid kann dazu dienen, dem Formteil eine erhöhte Brandfestigkeit zu verleihen. Es ist beispielsweise auch möglich, durch Verwendung eines Füllstoffs mit einer größeren Korngröße einen Gradienten des Füllstoffs innerhalb des Formteils aufzubauen. Wenn die Korngröße des Füllstoffs derart gewählt ist, dass er die Hohlräume zwischen dem Leichtstofffüllmaterial nur schwer oder gar nicht durchdringen kann, wird eine Anreicherung des Füllstoffs im o-berflächenahen Deckbereich erreicht.

Die Korngröße des Füllstoffs liegt daher bevorzugt in einem Bereich von 0,005 - 2 mm und noch bevorzugter in einem Bereich 0,01 - 1 mm. Der Anteil des Füllstoffs in dem gesamten Matrixmaterial des Leichtbau-Formteils als Durchschnitt zwischen Kernbereich und Deckbereich beträgt bevorzugt zwischen 30 - 90 Gewichtsprozent, bevorzugter zwischen 40 - 80 Gewichtsprozent, bezogen auf das Gewicht des Matrixmaterials. Der Füllstoffgehalt in dem Matrixmaterial kann daher direkt bei Herstellung des Matrixmaterials in Bezug auf das Matrixmaterial eingestellt werden, bevor das Matrixmaterial zum Ausgießen in die Form eingebracht wird.

Das Leichtfüllstoffmaterial im Kernbereich liegt bevorzugt zwischen 35-70 Volumenprozent.

Zur Verstärkung des Leichtbau-Formteils kann zusätzlich im Deckschichtbereich ein Fasermaterial eingebracht werden. Das Fasermaterial weist bevorzugt Glasfasern, Kohlefasern, Aramydfasern, Naturfasern und/oder Metallfasern oder deren Gemische auf. Das Fasermaterial kann beispielsweise als Band, Vlies, Gewebe, Gelege oder Gestrick vorliegen.

Bei der Herstellung eines Leichtbau-Formteils gemäß der vorliegenden Erfindung muss sichergestellt werden, dass zwei unterschiedliche Bereiche, nämlich ein Kernbereich mit einem Leichtfüllstoffmaterial und ein Deckschichtbereich ohne Leichtfüllstoffmaterial, ausgebildet werden. Diese Trennung in mindestens zwei Bereiche kann auf unterschiedliche Arten erfolgen.

Es ist beispielsweise möglich, zuerst einen Körper aus Leichtfüllstoffmaterial herzustellen. Dazu wird beispielsweise in einer Form oder Schalung mit einer Angussöffnung und einer Entlüftungsöffnung ein Leichtfüllstoffmaterial eingebracht, um den Hohlraum vollständig auszufüllen. Das eingebrachte Leichtfüllstoffmaterial kann wahlweise noch beispielsweise Rütteln oder Schütteln verdichtet werden. Es ist jedoch auch möglich, die Körper aus Leichfüllstoffmaterial wie in der Kerngießerei üblich, in einer verlorenen Schalung, die aus einer Mischung aus Quarzsand und Bindemittel hergestellt wird, zu fertigen.

Vorher einbringen in die Schalung oder anschließend werden die Leichtfüllstoffmaterialteilchen durch ein dünnflüssiges Bindemittel benetzt und durch Aushärten des Bindemittels miteinander verklebt. Wird eine verlorene Schalung verwendet, werden die Leichtfüllstoffkörper vor dem Einbringen in die Schalung, das üblicherweise unter Druck geschieht, um die Form vollständig auszufüllen, mit einem Bindemittel, vorzugsweise einem wasserlöslichen Bindemittel, benetzt. Es entsteht nach dem Aushärten ein Leichtfüllstoffkörper aus Leichtfüllstoffmaterial, das mit einem Bindemittel teilweise oder vollständig benetzt bzw. bedeckt ist.

Dieser Leichtfüllstoffkörper kann anschließend in eine etwas größere Schalungsform eingebracht werden. Durch die größere Form der zweiten Schalung entsteht in dem überstehenden Bereich beim Einbringen eines Matrixmaterials in die Schalung ein Deckschichtbereich, der lediglich von Matrixmaterial aufgefüllt wird. Somit kann ein Leichtbau-Formteil hergestellt werden, das einen Kernbereich mit Leichtfüllstoffmaterial und einen Deckschichtbereich ohne Leichtfüllstoffmaterial aufweist.

Durch das Verkleben des Leichtfüllstoffmaterials vor Einbringung des Matrixmaterials wird sichergestellt, dass die Integrität des Leichtfüllstoffkörpers durch das Einbringen des Harzes nicht aufgehoben wird und kein Leichtfüllstoffmaterial in den Deckschichtbereich kommt. Dabei darf durch das Matrixmaterial das Bindemittel des Leichfüllstoffkörpers nicht gelöst werden. Wenn das Matrixmaterial das Bindemittel des Leichtfüllstoffkörpers löst, wird dessen Integrität aufgelöst.
Es ist jedoch auch möglich, den Kernbereich und den Deckbereich durch geeignete Mittel zur Trennung der beiden Bereiche separat auszubilden. Dies kann beispielsweise über einen Spacer geschehen, der den Deckbereich von dem Kernbereich trennt. Der Spacer ist dabei für das flüssige Matrixmaterial durchlässig, nicht jedoch für Leichtfüllstoffmaterialien.

Das Matrixmaterial wird flüssig in eine Schalung oder Form gegossen, in der sich bereits Leichtfüllstoffmaterial befindet. Damit die Hohlräume zwischen dem Leichtfüllstoffmaterial annähernd vollständig oder vollständig von dem Matrixmaterial ausgefüllt werden, besitzt das Matrixmaterial vorzugsweise eine Viskosität im Bereich von 0,1 - 6 Pa.s. Das Matrixmaterial wird bevorzugt in die Form über eine erste Öffnung eingeführt. Zudem besitzt die Form vorzugsweise eine zweite Öffnung, die als Austrittsöffnung für entweichende Luft dient. In einem besonders bevorzugten Ausführungsbeispiel kann an die Austrittsöffnung ein Unterdruck oder ein Vakuum angelegt werden, bevor oder während das Matrixmaterial in die Form eingefüllt wird. Es ist weiterhin bevorzugt, das Matrixmaterial entgegen der Schwerkraft in die Form einzubringen.

Die Dicke des Kernbereichs beträgt bevorzugt mindestens 4 mm, bevorzugter mindestens 10 mm. Nach oben hin ist die Dicke des Kernbereichs nicht begrenzt. Die Dicke des Deckschichtbereich beträgt bevorzugt mindestens 0,1 mm, bevorzugter liegt sie im Bereich von 0,1 bis 3 mm. Der Deckschichtbereich kann dabei lediglich auf einer Seite des Formteils angebracht sein, auf mehreren Seiten, oder auf allen Seiten des Formteils. Bei Vorliegen mehrerer Deckschichtbereiche auf unterschiedlichen Seiten des Formteils können die Dicken der unterschiedlichen Deckschichtbereiche unterschiedlich oder gleich sein.

Abschließend kann das Leichtbau-Formteil nach dem Aushärten des Matrixmaterials und Entformen des gebildeten Leichtbauformteiles einem Finishing unterworfen werden. Dabei kann das Formteil beispielsweise poliert oder zugeschnitten werden.

In den Unteransprüchen finden sich vorteilhafte Weiterbildungen und Verbesserungen des in Anspruch 1 angegebenen Leichtbau-Formteils bzw. des in Anspruch 14 angegebenen Herstellungsverfahrens.

### Zeichnungen

Ausführungsbeispiele der Erfindung sind in den Zeichnungen dargestellt und in der nachfolgenden Beschreibung näher erläutert.

### Es zeigen:

Figur 1 eine schematische Querschnittsansicht eines Leichtbau-Formteils gemäße einer ersten Ausführungsform der vorliegenden Erfindung;
Figur 2 eine schematische Querschnittsansicht eines Leichtbau-Formteils gemäß einer zweiten Ausführungsform der vorliegenden Erfindung;
Figur 3 eine schematische Querschnittsansicht eines Leichtbau-Formteils gemäß einer dritten Ausführungsform der vorliegenden Erfindung; und
Figur 4 eine schematische Querschnittsansicht gemäß einer vierten Ausführungsform der vorliegenden Erfindung;
Figur 5 einen Ausschnitt aus dem Kernbereich eines Leichtbau-Formteils gemäß einer ersten Ausführungsform der vorliegenden Erfindung;
Figur 6 eine perspektivische Ansicht zur Erläuterung einer Form für ein Herstellungsverfahren für ein Leichtbau-Formteil gemäß einer fünften Ausführungsform der vorliegenden Erfindung;
Figur 7 eine schematische Querschnittansicht gemäß einer Schnittlinie A - A aus Figur 6;
Figur 8 eine schematische Querschnittsansicht zur Erläuterung einer modifizierten Form für das Herstellungsverfahren für ein Leichtbau-Formteil gemäß einer fünften Ausführungsform der vorliegenden Erfindung.

### Beschreibung der Ausführungsbeispiele

In den Figuren bezeichnen gleiche Bezugszeichen gleiche oder funktionsgleiche Elemente.

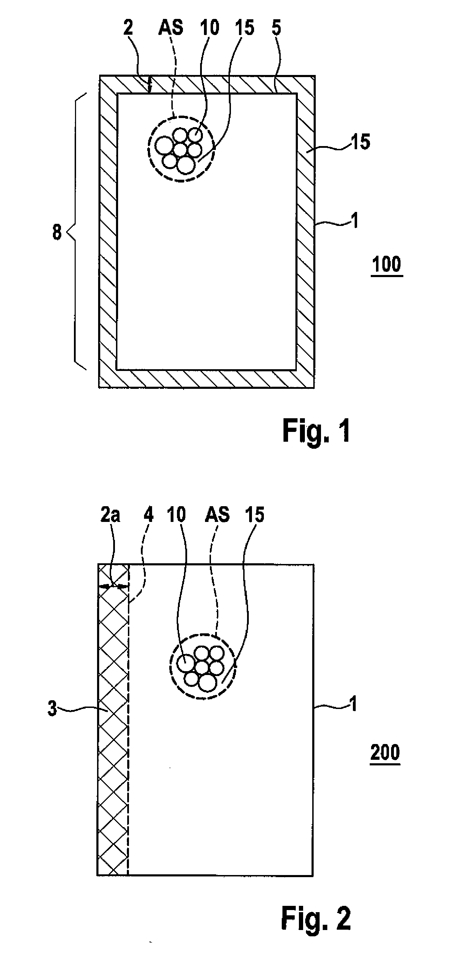

Figur 1 zeigt eine schematische Querschnittsansicht eines Leichtbau-Formteils gemäß einer ersten Ausführungsform der vorliegenden Erfindung. In Figur 1 bezeichnet Bezugszeichen 100 ein Leichtbau-Formteil aus einem Leichtbauverbundwerkstoff 10, 15, der ein Matrixmaterial 15 und ein Leichtfüllstoffmaterial 10 aufweist. Beim vorliegenden Beispiel besteht das Füllstoffmaterial 10 beispielsweise aus Hohlkugeln mit einem Durchmesser zwischen 4 mm und 6 mm, wohingegen das Matrixmaterial ein gehärteter Kunststoff auf Polyurethanacrylat-Basis ist. Zur Vereinfachung der Darstellung ist in Figur 1 nur ein gestrichelt umrandeter Ausschnitt AS des Kernbereichs 8 dargestellt. Weiterhin weist das Leichtbau-Formteil 100 einen oberflächlichen Deckschichtbereich 2 auf, welcher aus dem Matrixmaterial 15 aufgebaut ist. Dabei bezeichnet die Linie 5 in Figur 1 eine virtuelle Grenze des Kernbereichs, bis zu dem hin sich das Leichtfüllstoffmaterial 10 erstreckt. Aufgrund des Herstellungsverfahrens des Leichtbau-Formteils 100 liegt kein Leichtstofffüllmaterial 10 im Deckschichtbereich 2 vor, sondern lediglich das Matrixmaterial 15, das sich einteilig durchgehend vom Kernbereich 8 in den Deckschichtbereich 2 erstreckt.

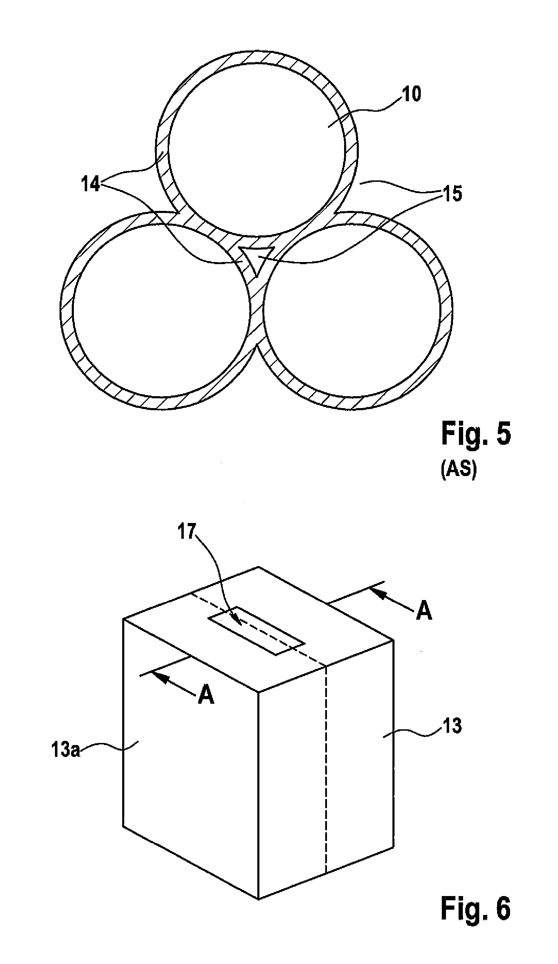

Das Leichtbau-Formteil 100 gemäß Figur 1 ist bei diesem Beispiel ein schmaler oder breiter, flacher oder gekrümmter Körper mit rechteckigem Querschnitt. Die spezielle Formgebung erfolgt in einem Herstellungsverfahren, welches weiter unten mit Bezug auf die Figuren 6 - 8 erläutert wird.

Figur 2 zeigt eine schematische Querschnittsansicht eines Leichtbau-Formteils gemäß einer zweiten Ausführungsform der vorliegenden Erfindung.

Das Leichtbau-Formteil 200 gemäß Figur 2 weist einen Abstandhalter bzw. Spacer 3 im Deckschichtbereich 2a auf. Der Spacer besitzt eine siebartig durchbrochene Spacerplatte 4, die für flüssiges Matrixmaterial 15 und gegebenenfalls weiteres Füllmaterial durchlässig ist, jedoch nicht für das Leichtfüllstoff-Materialien 10. Durch die Verwendung eines Spacers kann der Deckschichtbereich 2a beim Herstellungsverfahren frei von Leichtfüllstoffmaterial gehalten werden. Der Spacer wird während des Herstellungsverfahrens vor Einbringung des Leichtfüllstoffmaterials in einer Form verankert. Nach Auffüllen des verbleibenden Raumes mit Leichtfüllstoffmaterial kann die Form vollständig mit Matrixmaterial aufgefüllt werden. Aufgrund der selektiven Durchlässigkeit des Spacers, insbesondere der siebartig durchbrochenen Spacerplatte 4, für Matrixmaterial und nicht für Leichtfüllstoffmaterial verbleibt ein lediglich mit Matrixmaterial aufgefüllter Deckschichtbereich 2a.

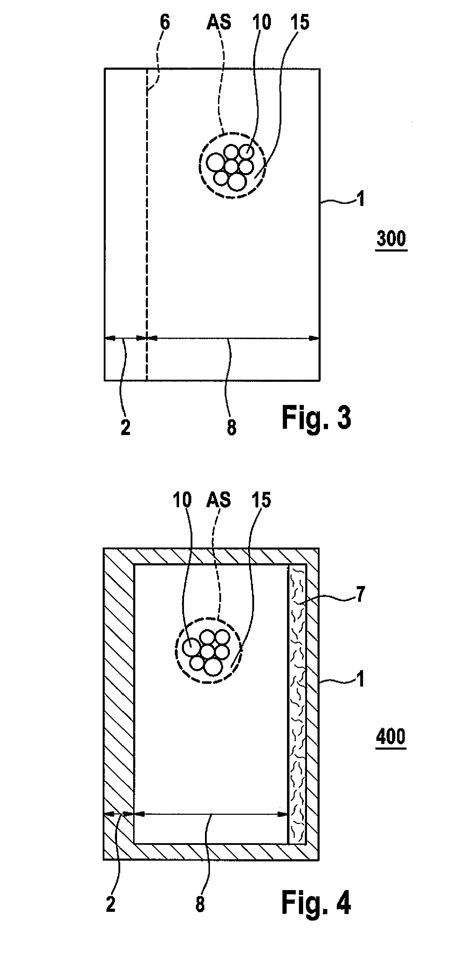

In Figur 3 ist eine schematische Querschnittsansicht eines Leichtbau-Formteils 300 gemäß einer dritten Ausführungsform der vorliegenden Erfindung gezeigt. In dieser Ausführungsform trennt ein Gitter 6 den Kernbereich 8 von dem Deckschichtbereich 2. Das Gitter ist wiederum selektiv durchlässig für Matrixmaterial 10 und undurchlässig für Leichtfüllstoffmaterial. Nach Einspannen des Gitters 6 in die Form und Einfüllen von Leichtstoffmaterial 10 in den für den Kernbereich 8 vorgesehenen Bereich wird die Form vollständig mit Matrixmaterial 15 aufgefüllt. Dabei wird das Leichtfüllstoffmaterial 10 durch das Gitter im Kernbereich 8 fixiert, wohingegen das Matrixmaterial 15 auch in den Deckschichtbereich 2 eindringen kann. Somit entsteht ein Deckschichtbereich 2, der frei von Leichtfüllstoffmaterial 10 ist.

Sowohl das Gitter als auch der Spacer verbleiben in dem Leichtbau-Formteil.

Figur 4 zeigt eine schematische Querschnittsansicht eines vierten Ausführungsbeispiels gemäß der vorliegenden Erfindung.

Gemäß einem vierten Ausführungsbeispiel besitzt das Leichtbau-Formteil 400 zusätzlich eine Verstärkung durch ein Fasermaterial 7. Diese Verstärkung befindet sich an der Grenzfläche zwischen dem Deckschichtbereich 2 und dem Kernbereich 8. Auch das Fasermaterial 7 ist vollständig von dem Matrixmaterial 15 durchdrungen. Das Fasermaterial 7 kann auch beispielsweise als Gitter, wie in der dritten Ausführungsform gemäß der vorliegenden Erfindung dargestellt, dienen. Durch die Einbringung eines Fasermaterials 7 in den Deckschichtbereich 2 kann dem Leichtbau-Formteil 400 eine zusätzliche Stabilität verliehen werden.

Figur 5 zeigt einen Ausschnitt aus dem Kernbereich 8 des Leichtbau-Formteils 100 gemäß einer ersten Ausführungsform der vorliegenden Erfindung. Das Leichtfüllstoffmaterial 10 ist in diesem Ausführungsbeispiel vollständig mit einem Bindemittel 14 bedeckt. Das Bindemittel stellt eine feste Verbindung bzw. Verklebung des Leichtfüllstoffmaterials 10 dar. Die einzelnen Teilchen des Leichtfüllstoffmaterials 10 werden somit zu einem einzigen Körper aus Leichtfüllstoffmaterial verklebt. Die sich zwischen den Leichtfüllstoffmaterialteilchen befindlichen Hohlräume werden durch das Matrixmaterial 15 aufgefüllt.

Figur 6 zeigt eine Form oder Schablone 13, 13a für ein Herstellungsverfahren gemäß einer ersten Ausführungsform der vorliegenden Erfindung. Zwei Formteilhälften 13 und 13a werden miteinander verbunden. Gemäß dem Ausführungsbeispiel besitzt die zusammengesetzte Form eine Auslass- oder Belüftungsöffnung 17.

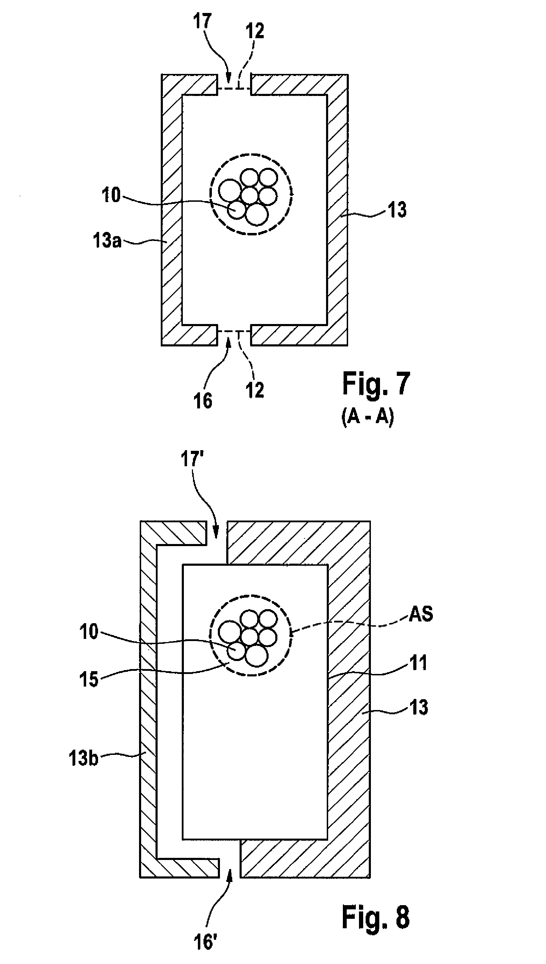

Figur 7 zeigt einen Querschnitt entlang der Linie A - A aus Figur 6. Die beiden Formteilhälften 13 und 13a sind miteinander verbunden. Auf der unteren Seite der zusammengesetzten Form befindet sich eine Einfüllöffnung 16 und auf der oberen Seite eine Belüftungsöffnung 17. Beide Öffnungen können jeweils durch ein Abdeckgitter 12, das für Leichtfüllstoffmaterialteilchen 10 undurchlässig ist, verschlossen werden. Nach Einfüllen eines Leichtfüllstoffmaterials 10, der mit einem Bindemittel 14 benetzt ist, in den Hohlraum innerhalb der Form können die beiden Öffnungen 16 und 17 verschlossen werden. Das Bindemittel 14 benetzt die Leichtfüllstoffmaterialteilchen vollständig und verklebt diese nach dem Aushärten. Somit entsteht nach Entfernung der Schalungshälften 13, 13a der Form ein Körper aus Leichtfüllstoffmaterial, das durch Bindemittel verklebt ist.

Nach Ersetzen der einen Formschalung 13a durch eine etwas größere Formschalung 13b wird in den nunmehr entstandenen neuen Hohlraum mit dem Leichtfüllmaterialbauteil ein Matrixmaterial 15 eingebracht. Nach Aushärten des Matrixmaterials 15 und Entformen des Formteils entsteht ein Leichtbau-Formteil 100 gemäß einer ersten Ausführungsform der Erfindung. Durch die im Verhältnis zur ersten Form leicht größeren Schalungsform 13b entsteht ein zusätzlicher Hohlraum, der nicht von Leichtfüllstoffmaterial 10 aufgefüllt wird. Dieser Bereich wird lediglich mit Matrixmaterial 15 aufgefüllt und bildet den Deckschichtbereich 2. Vor Einfüllen des Matrixmaterials 15 kann der Hohlraum über eine Belüftungsöffnung 17' evakuiert werden, um das Einfüllen des Matrixmaterials über die Einfüllöffnung 16' zu erleichtern und ein vollständiges Auffüllen der Hohlräume innerhalb des Leichtfüllstoffbauteils zu erleichtern.

Gemäß einer anderen Ausführungsform der vorliegenden Erfindung kann ein Faservlies in den Hohlraum zwischen der Schalung 13b und dem Leichtfüllstoffbauteil eingebracht werden.

Die in den folgenden Beispielen genannte Mischung A ist eine Füllstoffmischung aus einem Schaumgranulat (Poraver der Firma Dennert GmbH) mit einer Körnung von 4-8 mm und einer Körnung 2-4 mm im Volumenverhältnis 1:2.

Die mechanischen Werte wurden mit einer 3er Universalprüfmaschine der Firma zwick bestimmt. Die Prüflänge wurde auf 150 mm gesetzt. Die Prüflinge wurden, wenn nichts anderes angegeben ist, in einer Größe von 24 mm * 20 mm * 200 mm hergestellt.

**Beispiel 1:** Ein Blähglasgranulat der Mischung A wird mit einem in der Kerngießerei verwendeten 2-komponentigem Phenolharz (Avenol NB 400 von Ashland Südchemie Kernfest und Katalysator 4020 der gleichen Firma im empfohlenen Mischungsverhältnis) benetzt. Typischerweise werden sechs Volumenprozente des eingesetzten Füllstoffes hierzu verwendet. Diese Gemenge werden in eine aus zwei Hälften bestehende Form mit einem Dichtrahmen von 24 mm Dicke gefüllt und ausgehärtet. Eine für das Verfahren notwendige Festigkeit wird in diesem Fall ca. 5 Minuten nach Herstellung der Mischung erhalten. Nach dem Aushärten des Harzes wird die eine Formenhälfte entfernt und der Dichtrahmen durch einen 24 mm dicken Dichtrahmen ersetzt. Nun wird das Bindemittel, bestehend aus einem kalthärtenden, urethanmodifizierten Polyacrylat, wie es in der deutschen Anmeldung mit dem amtlichen Aktenzeichen DE 10 2006 047 687.5 offenbart ist, wie nachstehend beschrieben, so befüllt, dass der Flüssigkeitsspiegel gleichmäßig in der Form steigt und alle Hohlräume durchdringt. Nach der Aushärtung des Matrixmaterials kann das fertige Formteil mit einem 20 mm dicken Kernbereich, der überwiegend Leichtfüllstoffe enthält, und einer zweiten 4 mm dicken Acrylat-Deckschicht, entformt werden.

Beim Bindemittel findet als Kunstharz Askocryl® 2331/30 der ASK GmbH seinen Einsatz. Es weist bei einem Feststoffgehalt von ca. 70 % eine Viskosität von ca. 2.500 mPa.s bei 25°C auf und enthält ca. 70 % einer Mischung aus reaktivem Polymer und Urethanmethacrylat, sowie ca. 30 % Methylmethacrylat.

Zur Herstellung eines Kunstharz werden 80 kg Methyl(meth)acrylat vorgelegt. Luft wird durch das Methylmethacrylat geleitet. Unter Rühren und unter Luftzufuhr wird das Methylmethacrylat auf 50°C erwärmt. 20 kg Diakon® MH 254 der Lucite International Ltd. werden im 50°C warmen Methylmethacrylat gelöst und hierzu portionsweise unter Rühren zugegeben. Die Lösung von 20 kg Diakon® MH 254 in 80 kg Methylmethacrylat wird auf Raumtemperatur abgekühlt und dann die Luftzufuhr abgestellt. Bei 20 °C misst man am Brookfield-Viskosimeter eine Viskosität von ca. 280 mPa.s.

Zur Herstellung eines radikalisch härtbaren Stoffgemisches bzw. des Bindemittels werden 55,28 kg Kunstharz gemäß 1.1. und 40,2 kg Sirup gemäß 1.2. miteinander gemischt. Bei 20 °C misst man am Brookfield-Viskosimeter eine Viskosität von ca. 475 mPa.s.

**Beispiel 2:** Ein plattenförmiges Formteil wird aus zwei Platten, die durch Abstandsleisten auf 24 mm fixiert sind, gebildet. Die Platten, die die Form dieses Versuches bilden, sind mit jeweils einer 2 mm dicken Folie und einem Glasfaservlies belegt. Der Hohlraum zwischen den zwei Platten wird vollständig mit einer Mischung A, die mit dem oben beschriebenen Phenolharz in gleicher Weise benetzt ist, ausgefüllt, wobei auch eine Verdichtung des Materials stattfindet. Nach einer Härtungszeit von 20 Minuten werden die folienbelegten Formenplatten gegen Platten ohne Folie ausgetauscht, die jedoch mit einem Distanzstreifen zur Fixierung des entstandenen Kernes belegt sind.

Die Form wird mit einer Harzmischung wie oben beschrieben, in welcher 60 Gewichtsprozent Aluminiumhydroxid Trefil 774 der Quarzwerke GmbH dispergiert wurden, ausgefüllt. Nach dem Aushärten des Harzes erhält man ein plattenförmiges Formteil mit zwei 2 mm dicken Deckschichten aus gefülltem Polyacrylat auf der Ober- und der Unterseite eines 20 mm dicken Kernbereichs.
E-Modul: 3371 MPa
Biegefestigkeit: 35,2 MPa
Dichte: 1,04 g/cm³
Matrixmaterialanteil: 38 Gewichtsprozent

**Vergleichsbeispiel 3:** Ein plattenförmiges Formteil wird aus zwei Platten, die durch Abstandsleisten auf 20 mm fixiert sind, gebildet. Der Hohlraum zwischen den zwei Platten wird vollständig mit einer Mischung aus Poraver Granulat der Mischung A, die mit dem oben beschriebenen Phenolharz in gleicher Weise benetzt ist, vollständig ausgefüllt, wobei auch eine Verdichtung des Materials stattfindet. Nach einer Härtungszeit von 20 Minuten wird die Form mit einer Harzmischung, wie oben beschrieben, ausgefüllt. Nach dem Aushärten des Harzes erhält man ein plattenförmiges Formteil.
E-Modul: 946 MPa
Biegefestigkeit: 11,4 MPa
Dichte: 0,6 g/cm³
Matrixmaterialanteil: 67 Gewichtsprozent

Mit Hilfe einer 2 mm dicken Form wird nun aus der Mischung wie in Beispiel 3 beschrieben eine Platte gegossen, die aus dem Füllstoffbindemittelgemisch Alumiumhydroxid und der Harzmischung, wie oben beschrieben, besteht. Die so erhaltenen Platten werden nun mit Hilfe eines einkomponentigen PU-Klebers (Propellerleim PU, Rhenocoll GmbH) verklebt. Nach einer ausreichenden Aushärtung wurden nun die mechanischen Kennwerte im Dreipunktbiegeversuch bestimmt.
E-Modul: 1977 MPa
Biegefestigkeit: 20 MPa

Man kann feststellen, dass eine mehr als 45% niedrigere mechanische Festigkeit im Vergleich zum nicht verklebten Formteil aus dem Anwendungsbeispiel 2 erhalten wird.

**Beispiel 4:** Ein plattenförmiges Formteil wird aus zwei Platten, die durch Abstandsleisten auf 20 mm fixiert sind, gebildet. Die Platten, die die Form dieses Versuches bilden, sind mit jeweils einer 2 mm dicken Folie belegt. Der Hohlraum zwischen den zwei Platten wird vollständig mit einer Mischung aus Poraver Granulat der Mischung A, die mit dem oben beschriebenen Phenolharz in gleicher Weise benetzt ist, vollständig ausgefüllt, wobei auch eine Verdichtung des Materials stattfindet. Nach einer Härtungszeit von 20 Minuten werden die folienbelegten Formenplatten gegen Platten ohne Folie, die jedoch mit einem Distanzstreifen zur Fixierung des entstandenen Kernes belegt sind, ausgetauscht. Die Form wird mit einer Harzmischung, der 2,5 % einer Titanoxidpaste zugesetzt wurde, wie oben beschrieben, ausgefüllt. Nach dem Aushärten des Harzes erhält man ein plattenförmiges Formteil mit beidseitig einer 2 mm dicken weißen Deckschicht aus Polyacrylat.
E-Modul: 1867 MPa
Biegefestigkeit: 13,7 MPa
Dichte 0,74 g/cm³
Matrixmaterialanteil: 77 Gewichtsprozent

**Beispiel 5:** Ein plattenförmiges Formteil wird aus zwei Platten, die durch Abstandsleisten auf 20 mm fixiert sind, gebildet. Die Platten, die die Form dieses Versuches bilden, sind mit jeweils einer 2 mm dicken Folie belegt. Der Hohlraum zwischen den zwei Platten wird vollständig mit einer Mischung aus Poraver Granulat der Mischung A, die mit dem oben beschriebenen Phenolharz in gleicher Weise benetzt ist, vollständig ausgefüllt, wobei auch eine Verdichtung des Materials stattfindet. Nach einer Härtungszeit von 20 Minuten werden die folienbelegten Formenplatten gegen Platten ohne Folie ausgetauscht, die jedoch mit einem Distanzstreifen zur Fixierung des entstandenen Kernes belegt sind. Die Form wird mit einer Bindemittelmischung wie oben beschrieben, in welcher 60 Gewichtsprozent Cristobalitmehl Silbond 3000 MST der Quarzwerke GmbH dispergiert wurden, ausgefüllt. Nach dem Aushärten des Harzes erhält man ein plattenförmiges Formteil mit einer 2 mm dicken Deckschicht aus gefülltem Polyacrylat.
E-Modul: 3851 Mpa
Biegefestigkeit: 1755 N
Dichte: 1,04 g/cm³
Matrixmaterialanteil: 36 Gewichtsprozent

Obwohl die vorliegende Erfindung anhand bevorzugter Ausführungsbeispiele vorstehend beschrieben wurde, ist sie darauf nicht beschränkt, sondern auf vielfältige Weise modifizierbar.

So sind die unterschiedlichen Hilfsmittel zur Ausbildung eines Deckschichtbereichs auch miteinander kombinierbar, beispielsweise kann ein eingebrachtes Fasermaterial 7 ebenso als Gitter 6 dienen.

### Bezugszeichenliste

- 1: Oberfläche
- 2: Abstand Grenzschicht
- 2a: Abstand mit Spacer
- 3: Spacer
- 4: siebartig durchbrochene Spacerplatte
- 5: Grenzfläche
- 6: Gitter
- 7: Fasermaterial
- 8: Kernbereich
- 10: Hohlkugel
- 11: Grenze der ersten Schalung
- 12: Abdeckgitter
- 13, 13', 13": Schalung
- 14: Bindemittel
- 15: Matrixmaterial
- 16, 16': Einfüllöffnung
- 17, 17': Belüftungsöffnung
- 100: 1. Ausführungsbeispiel
- 200: 2. Ausführungsbeispiel
- AS: Ausschnitt

## Patentansprüche

1. Leichtbau-Formteil mit:
einem Kernbereich (8) aus einem Leichtbau-Verbundwerkstoff (10, 15), der ein Matrixmaterial (15) und mindestens ein Leichtfüllstoffmaterial (10) aufweist;
mindestens einem oberflächlichen oder oberflächennahen Deckschichtbereich (2, 2a), der das Matrixmaterial (15) und kein Leichtfüllstoffmaterial (10) aufweist.

2. Leichtbau-Formteil nach Anspruch 1, wobei der Kernbereich (8) eine Dichte von 0,2 bis 0,9 g/cm³, bevorzugt von 0,3 bis 0,7 g/cm³ aufweist.

3. Leichtbau-Formteil nach Anspruch 1 oder 2, wobei der Deckschichtbereich (2, 2a) eine Dichte von 1 bis 2,6 g/cm³, bevorzugt von 1,2 bis 2,2 g/cm³ und noch bevorzugter von 1,4 bis 2,1 g/cm³ aufweist.

4. Leichtbau-Formteil nach einem der vorhergehenden Ansprüche, wobei das Leichtfüllstoffmaterial (10) in Form von Hohlkörpern, bevorzugt Hohlglaskugeln, Blähton, Blähglasgranulaten, geschäumtem Blähglas, Mineralschaumgranulaten, Metallschaumgranulaten oder Hohlkugeln aus Glas, Keramik oder Verbundwerkstoffen ausgebildet ist.

5. Leichtbau-Formteil nach einem der vorhergehenden Ansprüche, wobei der Kernbereich (8) des Weiteren ein Bindemittel (14) aufweist, das das Leichtfüllstoffmaterial (10) beschichtet.

6. Leichtbau-Formteil nach einem der vorhergehenden Ansprüche, wobei das Bindemittel (14) und/oder das Matrixmaterial (15) ausgewählt ist aus der Gruppe, bestehend aus Polyesterharzen, Epoxidharzen, Polymethylacrylaten, Vinylesterharzen, Polyurethanen, urethanmodifizierte Polyacrylate und Silikonharzen.

7. Leichtbau-Formteil nach einem der vorhergehenden Ansprüche, wobei das Leichtfüllstoffmaterial (10) eine Dichte von 0,05 bis 1 g/cm³, bevorzugt von 0,1 bis 0,5 g/cm³ und noch bevorzugter von 0,12 bis 0,4 g/cm³ aufweist.

8. Leichtbau-Formteil nach einem der vorhergehenden Ansprüche, wobei das Leichtfüllstoffmaterial eine mittlere Korngröße von 0,3 bis 16 mm, bevorzugt von 0,5 bis 8 mm und noch bevorzugter von 1 bis 4 mm aufweist.

9. Leichtbau-Formteil nach einem der vorhergehenden Ansprüche, wobei das Matrixmaterial (15) des Weiteren mindestens einen Füllstoff aufweist, wobei der Füllstoff bevorzugt aus der Gruppe ausgewählt ist, bestehend aus Glasfasern, mineralischen Füllstoffen und organischen Füllstoffen, und der Füllstoff insbesondere bevorzugt Aluminiumhydroxid, Quarz, eine Quarzmodifikation oder ein quarzhaltiges Gemenge ist.

10. Leichtbau-Formteil nach Anspruch 9, wobei der Füllstoffgehalt im Matrixmaterial (15) von 30 bis 90 Gew.-%, bevorzugt von 40-85 Gew.-%, bezogen auf das Gewicht des Matrixmaterials, beträgt.

11. Leichtbau-Formteil nach Anspruch 9 oder 10, wobei die Korngröße des Füllstoffs von 0,005 bis 2 mm, bevorzugt von 0,01 bis 1 mm beträgt.

12. Leichtbau-Formteil nach einem der vorhergehenden Ansprüche, wobei der Deckschichtbereich (2, 2a) des Weiteren mindestens ein Fasermaterial (5) aufweist, das bevorzugt mindestens eine der folgenden Fasertypen aufweist: Glasfasern, Kohlenstofffasern, Aramidfasern, Naturfasern, Metallfasern.

13. Leichtbau-Formteil nach einem der vorhergehenden Ansprüche, wobei der Anteil des Leichtfüllstoffmaterials (10) am Kernbereich (8) von 35 bis 70 Vol.-% beträgt.

14. Herstellungsverfahren für ein Leichtbau-Formteil mit den Schritten:
Bereitstellen einer Form (13, 13a) mit einem Hohlraum;
Auffüllen des Hohlraums der Form (13, 13a) mit einem Leichtfüllstoffmaterial (10), das mit einem härtbaren, flüssigen Bindemittel (14) benetzt ist;
Aushärten des Bindemittels (14), um einen Leichtfüllstoff-Körper herzustellen;
Ersetzen eines Teils der Form (13a) durch eine Form (13b) mit einem größeren Hohlraum;
Auffüllen des Hohlraums und des Leichtfüllstoff-Körpers mit einem Matrixmaterial (15), wobei das Matrixmaterial (15) den Leichtfüllstoffkörper infiltriert, um einen Kernbereich (8) auszubilden;
Aushärten des Matrixmaterials (15), wodurch das Leichtbau-Formteil gebildet wird; und
Entformen des gebildeten Leichtbau-Formteils.

15. Herstellungsverfahren für ein Leichtbau-Formteil nach Anspruch 14, wobei die Form (13, 13a) eine erste und eine zweite Öffnung (16, 16', 17, 17') aufweist, von denen die eine zum Auffüllen des Hohlraums mit dem Füllstoffmaterial (10) und von denen die andere zum Auffüllen des Hohlraums mit dem Matrixmaterial (15) verwendet wird.

16. Herstellungsverfahren für ein Leichtbau-Formteil nach Anspruch 14, wobei die Viskosität des Matrixmaterials (15) bei Auffüllen des Hohlraumes von 0,1 bis 6 Pa.s beträgt.

17. Herstellungsverfahren für ein Leichtbau-Formteil nach Anspruch 14, wobei nach dem Entformen ein Finishing in Form eines Zuschneidens oder Polierens erfolgt.
